# EUROPEAN PATENT SPECIFICATION

(11) **EP 4 395 351 B1**
(45) Date of publication and mention of the grant of the patent: **22.07.2026**
(21) Application number: 23215735.4
(22) Date of filing: 12.12.2023
(51) Int. Cl.: H04N 23/60, H04N 23/661, G06V 20/52, H04N 7/18, H04N 23/667, H04N 23/61, H04N 23/90, H04N 23/65

(54) **SENSOR NETWORK**
SENSORNETZWERK
RÉSEAU DE CAPTEURS

(30) Priority: 29.12.2022 FI 20226176
(43) Date of publication of application: 03.07.2024
(73) Proprietor: Nokia Solutions and Networks Oy, 02610 Espoo (FI)
(72) Inventor: LU, Ming, Hillsborough - NJ, 08844 (US); HOSANGADI, Gurudutt, Hackettstown - NJ, 07840 (US)
(74) Representative: Laine IP Oy

(56) References cited:
- US-A1- 2019 080 575
- US-A1- 2022 392 081

## Description

### FIELD

The present disclosure relates to management of a sensor network.

### BACKGROUND

Networks of plural sensors, known as sensor networks, may comprise networked sensor units and a processing substrate, or substrates, configured to process sensor data from the sensors into information that is usable. For example, when the sensors are radars the information may include conclusions or inferences concerning aircraft flying within range of the radars, which may cover the airspace of an entire country, for example, Further examples of sensor networks include microphone sensors, such as hydrophone sensors.

A specific type of sensor network is a video camera network, where plural video sensors are configured to obtain image data, in the form of image frames, of a target area. A video camera network may be installed in a manufacturing facility, a museum, a shopping centre, or in a city area to monitor events, persons or vehicles in the respective area.

Document US2022/392081 A1 discloses methods for object path detection in a workplace, wherein an initial sequence of frames is captured at a baseline frame rate responsive to detecting absence of motion. Responsive to detecting motion, a frame is captured using the baseline frame rate and a set of object paths is transmitted to a computer system. Document US2019/080575 A1 discloses a surveillance system, wherein a gateway includes a communication module configured to communicate with plural networked cameras. Motion is recognized based on even information transmitted by a first one of the cameras, and subject information is generated based on the motion of the subject.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to obtain longer-term statistical information from output data of plural sensors of a sensor network, using a sliding time window of a first length, obtain shorter-term statistical information from output data of the plural sensors of the sensor network, using a sliding time window of a second length which is shorter than the first length, and assign at least a subset of sensors of the sensor network into a reduced activity state based on sensor data from each respective one of the at least the subset of the sensors of the sensor network, wherein the apparatus is configured to select a rate at which sensors in the reduced activity state provide sensor data based at least on the longer-term statistical information and the shorter-term statistical information and command the at least the subset of sensors to use the selected rate in the reduced activity state.

According to a third aspect of the present disclosure, there is provided a computer-implemented method comprising obtaining longer-term statistical information from output data of plural sensors of a sensor network, using a sliding time window of a first length, obtaining shorter-term statistical information from output data of the plural sensors of the sensor network, using a sliding time window of a second length which is shorter than the first length, and assigning at least a subset of sensors of the sensor network into a reduced activity state based on sensor data from each respective one of the at least the subset of the sensors of the sensor network, wherein the method comprises selecting a rate at which sensors in the reduced activity state provide sensor data based at least on the longer-term statistical information and the shorter-term statistical information, and commanding the at least the subset of sensors to use the selected rate in the reduced activity state.

According to a seventh aspect of the present disclosure, there is provided a non-transitory computer readable medium having stored thereon a set of computer readable instructions that, when executed by at least one processor, cause an apparatus to at least obtain longer-term statistical information from output data of plural sensors of a sensor network, using a sliding time window of a first length, obtain shorter-term statistical information from output data of the plural sensors of the sensor network, using a sliding time window of a second length which is shorter than the first length, and assign at least a subset of sensors of the sensor network into a reduced activity state based on sensor data from each respective one of the at least the subset of the sensors of the sensor network, wherein the apparatus is configured to select a rate at which sensors in the reduced activity state provide sensor data based at least on the longer-term statistical information and the shorter-term statistical information and to command the at least the subset of sensors to use the selected rate in the reduced activity state.

### BRIEF DESCRIPTION OF THE DRAWINGS

FIGURE 1 illustrates an example system in accordance with at least some embodiments of the present invention;
FIGURE 2A illustrates a method of controlling a sensor network in accordance with at least some embodiments;
FIGURE 2B illustrates a method in a processing service in accordance with at least some embodiments;
FIGURE 2C illustrates a method in a processing service in accordance with at least some embodiments;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

Methods are described herein to manage a sensor network, the methods enabling controlling bandwidth usage of sensors of the sensor network as the sensors provide their sensor data to an analysis or inference function. Further, computing resources of a processing service used by the sensor network are conserved by enabling selective processing of the sensor data in cases where plural processing functions are run in the processing service. In detail, a length of an inactive period in a reduced activity state may be selected by the system in a dynamic manner, enabling using longer inactivity, corresponding to reduced bandwidth usage, when a target observed by the sensor network is in a stable state. The longer inactivity in the reduced activity state corresponds to a lower rate at which the sensor provides its sensor data items. As to the computing resources, a part of sensor data may be skipped in the processing service, where different processing functions have differing requirements as to how often they need to process new data. Also the reduced rate at which sensors provide their sensor data items conserves processing resources, as the quantity of data to process is reduced. Reduction of the quantity of data may also result in reduced processing delay. These methods will be described in more detail below.

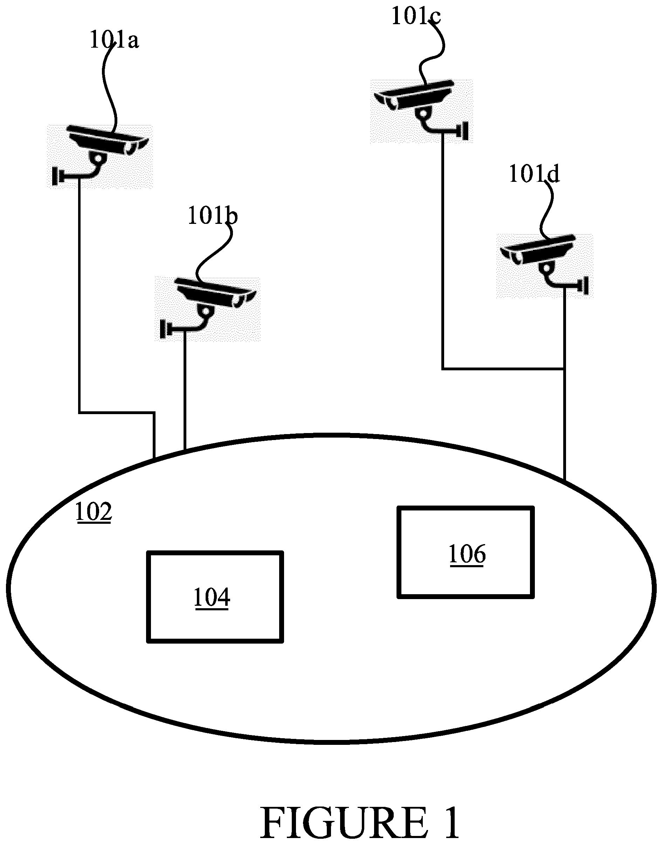

FIGURE 1 illustrates an example system in accordance with at least some embodiments of the present invention. Video cameras 101a, 101b, 101c and 101d are configured to each image a respective target area. The target areas may, at least partly and at least for some video cameras, overlap each other. The video cameras, or at least some of them, may be configured to turn according to a pre-set schedule, or to track moving targets in their field of view. In some cases, a video camera may be mounted on a flying drone. While four video cameras are illustrated in FIGURE 1, in general a network of video cameras may comprise fewer than four, or more than four, video cameras. Indeed, the network may comprise dozens, or even more than a hundred, video cameras. Not all the video cameras need be of a same type, for example, they may have differing capabilities in terms of colour recording, frame rate and/or image resolution. Further, at least a part of the video cameras may image their target area in the infra-red spectral range while others may operate in the visible spectrum. In general, a video camera is a device configured to obtain an image, known as an image frame, of its target area repeatedly at a set rate. The rate is known as a frame rate and may be, for example, 50 frames per second, 30 frames per second or 20 frames per second.

While discussed herein primarily in terms of a network of video cameras, in general the methods disclosed herein are compatible with sensor networks, wherein the sensors of the sensor network may be video cameras, radars, microphones or other suitable sensor apparatuses. An image frame is a sensor data item of a video camera, a radar image is a sensor data item of a radar, and a sound recording of a set length, such as 5 seconds, is a sensor data item of a microphone. Radar networks may be configured to monitor aircraft in an airspace of a set area, such as a country, for example, while microphones may be set in water, when they are known as hydrophones, to monitor underwater sounds to e.g. detect submarines moving in the area. In general, sensors of the sensor network are configured to produce sensor data in the form of sensor data items, for example at a dynamically adjusted rate.

The video cameras 101a, 101b, 101c and 101d of FIGURE 1 are communicatively coupled with a communication network 102, which may be a wire-line network or at least in part a wireless network. Coupled with network 102 are, further, an analysis or inference function, also known as a sensor data processing service 104, and a control service 106. Processing service 104 and control service 106 may run on a same physical computing substrate, such as a cloud server, or on different computing substrates, such as cloud servers or standalone servers.

Processing service 104 may comprise a machine-learning solution trained with generated sensor data to recognize various situations, depending on the embodiment in question. Alternatively, processing service 104 may run an analytical model which does not use machine learning. For example, depending on the embodiment, processing service 104 may be configured to recognize the presence of manufacturing robots in the target area of a specific video camera, to detect a human close to a manufacturing robot, to detect the presence of humans, or the density of humans per area, in a museum or shopping centre, or to detect likely presence of a submarine from features of an audio clip. Processing service 104 may run plural processing functions, dedicated to different analytical tasks. The plural processing functions may be fed with the same sensor data units, such as image frames, for example. The various processing functions may have different sensor data item process rates at which they need to receive sensor data units. For example, these sensor data item process rates may be 10 sensor data items per second for a first processing function and one sensor data item per second for a second processing function.

Control service 106 may be configured to receive inputs from the sensors comprised in the sensor network, and to issue control messages to the sensors, such as video cameras 101a, 101b, 101c and 101d, and/or to processing service 104. The inputs may comprise copies of the sensor data items, for example. In detail, control service 106 may determine which ones of the sensors are in an active state and which ones are in an inactive state. This determination may be performed based on sensor data items analysed in control service 106, or in processing service 104. The determination whether a sensor is in the active state may be based on determining that the sensor is capturing a certain type of information, such as specific visual targets in the case of video cameras, radar returns in the case of radars and periodic sound in the case of hydrophones, for example. Control service 106 may be configured to control, which sensors are in the active state and which ones are in the inactive state. For example, the sensors may be in active state until instructed by control service 106 to transition to the inactive state, and to remain in the inactive state until instructed by control service 106 to transition to the active state.

Furthermore, control service 106 may be configured to dynamically select at least one parameter for the inactive state. For example, the dynamically selected parameter may be a rate at which the sensors in the inactive state provide sensor data items to processing service 104 via network 102. For example, control service 106 may be configured to select the rate at which the inactive state sensors provide their sensor data items from a less reduced rate and a more reduced rate, wherein both the less reduced rate and the more reduced rate are lower rates than the rate at which sensors in the active state provide their sensor data items to processing service 104. For example, the less reduced rate may comprise that the sensor data item production rate of the active state is reduced by a factor of ten, and the more reduced rate may comprise that the sensor data item production rate of the active state is reduced by a factor of twenty. Clearly, reducing the rate by e.g. ten or twenty greatly reduces the bandwidth required to convey the sensor data items to processing service 104. In the active state, for example, the sensors may provide all the sensor data items they generate at their respective nominal rates to processing service 104. Alternatively, the active state may comprise that they provide their sensor data items at a separate, selected rate chosen between the nominal sensor rate and the less reduced rate. In at least some embodiments, each of the sensors provides sensor data items at a separate constant rate in each of the active state, the inactive state with the less reduced rate and the inactive state with the more reduced rate.

In some embodiments, the rate at which sensor data items are generated in the inactive state is selected for the sensor network as a whole, thus affecting all sensors in the inactive state. In addition to this, control service 106 may separately, individually configure selected ones of the sensors in the inactive state to use a different rate, in which case the individually configured inactive-state sensor data item generation rate overrides the system-wide inactive-state sensor data item generation rate in these selected ones of the sensors.

In general, the inactive state, using whichever rate which is less than the rate of the active state, is a reduced activity state when compared to the active state. In at least some embodiments, all sensors of the network are in either the active state or in the inactive state.

Control service 106 may be configured to select, for all sensors of the network in the inactive state, either the less reduced rate or the more reduced rate based on system-wide statistics derived in or for control service 106. In detail, control service 106 may be configured to use longer-term statistical information from output data of plural sensors of a sensor network, using a sliding time window of a first length and shorter-term statistical information from output data of plural sensors of the sensor network, using a sliding time window of a second length which is shorter than the first length. Control service 106 may, for this task, build information from the output data of the plural sensors based on processing service 104. A plurality of inference output from plural sensors may be used in this task. The longer-term and the shorter-term statistical information may be derived from the same plurality of sensors. The shorter-term statistical information is of shorter term due to the shorter length of the sliding window of the second length, compared to the first length.

Control service 106 may be configured to select the more reduced rate for the sensors in the inactive state as a response to the longer-term statistical information and the shorter-term statistical information indicating a same state of the sensor network. Control service 106 may be configured to select the less reduced rate for the sensors in the inactive state as a response to the longer-term statistical information and the shorter-term statistical information indicating different states of the sensor network. In essence, the more reduced rate for providing the sensor data items from sensors in the inactive state means that these sensors will be able to react to a change in a state of the observed system slower than if the less reduced rate were used. In case the longer-term statistical information and the shorter-term statistical information convey a similar state of the observed system, it appears that the system is not changing its state, and the longer sleep periods associated with the more reduced state are acceptable. On the other hand, if the shorter-term statistical information indicates a different observed system state than the longer-term statistical information, the observed system may be changing its behaviour, and it makes sense to keep the inactive sensors in the less reduced rate, to enable them to faster respond to targets of interest appearing in their sensor data.

The longer- and shorter-term statistical information may be compiled over the entire system, from all the sensors or at least from plural sensors of the system, based on, for example, an aggregate number of targets detected by the plural sensors taken together, a general average activity level in sensor data of the plural sensors, a speed at which targets move in sensor data of the plural sensors wherein the sensor data is video data, and a system-wide maximum level of activity in a single sensor comprised in the plural sensors, wherein the sensor data is video data. As a specific example, if the sensor network is the video camera network of FIGURE 1 and it is configured to monitor a factory site, the system-wide statistical information may convey, whether all robots of the factory site are present in video feeds of video cameras in the active state. If this is the case and the purpose of the sensor network is to monitor the robots, then inactive state video cameras may be set to the more reduced rate, since all the robots are accounted for and none are expected to appear in target areas of the inactive cameras. Then if one robot leaves the target area of an active-state camera, the system-wide statistical information will indicate this in the short-term information, which then differs from the longer-term statistical information and the less reduced rate may be selected by control service 106 for the inactive state video cameras.

Control commands issued by control service 106 may include the following for each sensor in the network: activity state: active or inactive, and rate of the inactive-state sensor data item production. The rate of the inactive-state sensor data item production may be irrelevant, if the sensor is in the active state, or a less reduced rate or a more reduced rate in case the sensor is in the inactive state. In some embodiments, the sensors themselves assign themselves to active or inactive states, in which case the control service 106 does not do this, but still controls the system-wide parameter of inactive-state sensor data item production rate.

Considering the fact that in practice there may be far fewer objects of interest than the number of e.g. video cameras in a large machine vision system, and a scene may not be always changing, it is not needed to send all frames from each camera to processing service 104 for analysis. This is to say, if the system has the intelligence to identify the e.g. video segments that contain the relevant information, the system can send the meaningful video data to processing service 104 so that a large amount of computing resources and network bandwidth can be conserved. Using control service 106 also provides the advantage, that the sensors themselves need not be provided with an ability to analyse the sensor data items to any great degree, which simplifies the sensor network.

Video cameras 101a, 101b, 101c and 101d may be configured to image different target areas, depending on the embodiment. For example, the video cameras may be installed in an industrial manufacturing facility, where robots and/or persons move about. Alternatively, the video cameras may be installed in a museum, to monitor a number of persons inside and, optionally, detect attempted burglaries. As a yet further alternative, the video cameras may be installed in a city centre, to monitor traffic density and pedestrian density, for example.

As the number of video cameras may be fairly high, the frame rates of the video cameras may be tens of frames per second and the frame resolution in modern video cameras may be high, even so-called 2k or 4k resolution (for example, 2048x1080 for 2k or 3840x2160 for 4k), communicating the image frames over network 102 may consume a lot of communication bandwidth of this network. On the other hand, processing the frames at processing service 104 may likewise consume a great deal of processing resources, which includes energy consumed in the processing. Methods are thus of interest which conserve communicating resources of network 102 and processing resources of processing service 104, while maintaining the ability of processing service 104 to draw meaningful conclusions from the sensor data generated by the sensors, such as video cameras 101a, 101b, 101c and 101d of FIGURE 1.

Control system 106 may be configured to provide to processing service 104 of the sensor network an instruction to skip processing of a part of sensor data from a first sensor of the sensor network in at least one processing function of the sensor data processing service. A reason for this may be, that the sensor is configured to provide its sensor data items at the rate defined for active state, for example 20 sensor data items per second, and a first processing function uses all the 20 sensor data items per second. However, another processing function of processing service 104 may only need five sensor data items per second, wherefore control system 106 may instruct processing service 104 to only feed every fourth sensor data item received from the first sensor to the other processing function. Thus unnecessary processing of sensor data items may be avoided in processing service 104, conserving processing resources and energy.

When the sensors are video cameras, each camera may have only limited processing power, being configured to, for example, down-sample the video frame stream at a specific rate, selected by control service 106 as described herein above. The video camera may further compress the raw images in a format such as JPEG or PNG, for example. The video camera may be able to perform light-weight video analytics, such as motion detection. In some embodiments video camera devices acting as sensors of the network are configured to send frames to processing service 104 service at a full rate corresponding to the active state, or a reduced frame rate as per control instructions from control service 106, or at an even lower frame rate if it is deemed, based on the motion detection in the camera, that the scene is unchanging and has no relevant visual information.

The processing service 104 employs models which may run on acceleration devices such as graphics processing units, GPUs, to provide understanding of the scenes imaged by video cameras. There may be one or multiple processing functions per model that are run in one or multiple GPU devices in processing service 104. The processing service may have the following basic functions: receiving image frames from the sensors, selectively feeding the image frames to the processing functions according to control instructions received from control service 106, and/or according to the freshness of the images.

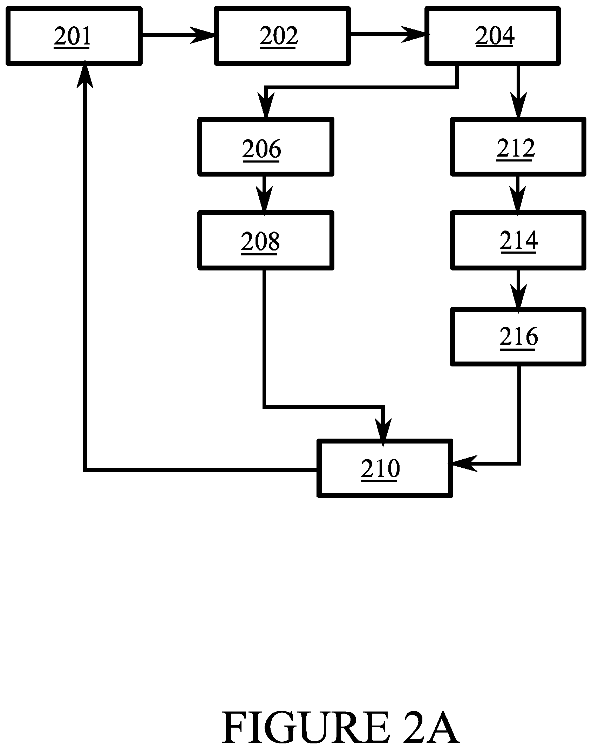

FIGURE 2A illustrates a method of controlling a sensor network in accordance with at least some embodiments. The sensor network of FIGURE 2A is a video camera network. This method relates to a general cases where multiple instances of a specific object class may be present in the scenes of video cameras acting as sensors of the sensor network, so that it may be challenging to recognize the individual objects. In these cases, decisions will be made simply be based on the number of active cameras observed over the short sliding window and long sliding window respectively, as will now be described.

In phase 201, video sensor data items, in other words image frames, are collected using the video cameras of the system. In phase 202, each video camera is assessed as to whether objects of interest are detected using a short sliding window, for example three seconds. If movement or objects of interest are detected, the respective camera is considered active. In phase 204, the number of active cameras is counted over the short sliding window and a longer sliding window, such as 30 seconds, for example.

In at least some embodiments, in case the number of active cameras during the longer window is equal to the count of active cameras during the shorter window, processing advances to phase 206, where the more reduced rate is selected for sensors in the inactive state. From phase 206, processing advances to phase 208 where a command is prepared for inactive video cameras, commanding them into the more reduced capture rate. Processing may alternatively proceed from phase 216 before proceeding to phase 208. The command is sent in phase 210, the command may be disseminated by broadcasting, for example. The process then returns to phase 201.

On the other hand, if there are more active cameras counter over the longer sliding window, processing advances from phase 204 to phase 212, where the less reduced rate is selected for inactive-state sensors, and in phase 214 a corresponding command is prepared for the inactive-state sensors. In phase 216, which is optional, separately for video cameras which have used the less reduced rate for more than a threshold length of time, they are assigned the more reduced rate. The command, or commands, are issued in phase 210 as discussed above, and processing returns once more to phase 201.

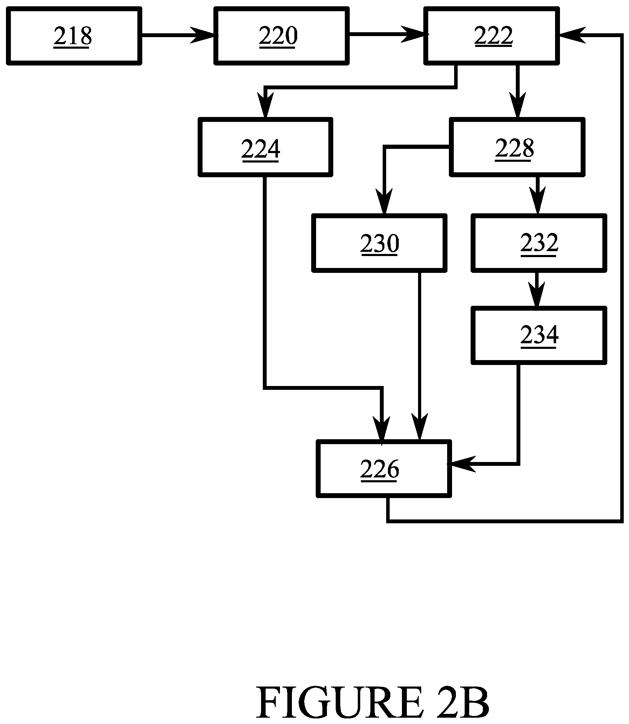

FIGURE 2B illustrates a method in a processing service, such as processing service 104 of FIGURE 1, in accordance with at least some embodiments. In phase 218, a control command concerning a specific video camera is received in processing service 104. The command relates to whether the specific video camera is in the active or the inactive state, and if in the inactive state, what is the sensor data item production rate set for the video camera. In phase 220, the processing service schedules an inference time for each camera, for example as inference_time = now + 1/rate × u, where u is a random number between zero and one, and rate is the image frame production rate set for the camera. In phase 222, an image frame is received from the specific video camera. In case the specific camera is in active mode, processing advances to phase 224, where an inference flag and an active flag for the received image frame are both set to "true", and in phase 226 the received image frame is put in a queue.

On the other hand if the specific camera is in the inactive mode, processing advances from phase 222 to phase 228, where the active flag for the received image frame is set to "false". It is then determined, if the current time is more advanced than the inference_time for this camera, in other words, if inference_time for this video camera is already in the past, or is the current moment. If this is not the case, the inference flag for the image frame is set to "false" in phase 230, and the frame is put in the queue in phase 226. On the other hand if present time is the inference_time or a later time, the inference flag is set to "true" in phase 232, and the inference_time is updated as inference_time = inference_time + 1/rate in phase 234. The image frame is put in the queue in phase 226, from which processing returns to phase 222, as illustrated. Separate queues may be established for separate processing functions in the processing service 104.

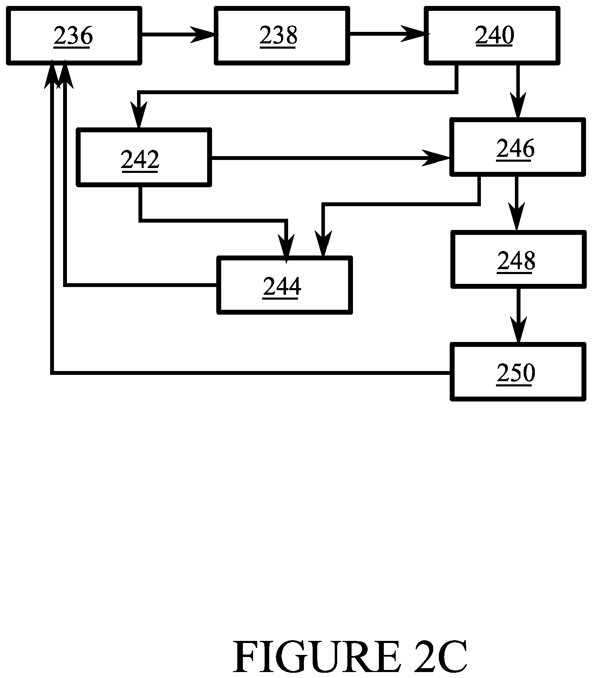

FIGURE 2C illustrates a method in a processing service, such as processing service 104 of FIGURE 1, in accordance with at least some embodiments. The process begins from phase 236, when an image frame is retrieved from a queue described in connection with FIGURE 2B. In phase 238, metadata of the image frame is read, in particular, a timestamp indicating when the image frame was put in the queue and flags active and inference, set in the process described in FIGURE 2B. Processing advances to phase 240, where it is determined whether a current time from which a time indicated by the timestamp is subtracted is greater than a value T_delay corresponding to maximum allowable wait time, for example 500 milliseconds. If the current time is more than this difference, processing advances to phase 242 where it is determined, if the active flag is "true". If so, the frame from an active camera has gone stale in the queue, and processing advances to phase 244 where the image frame is sent to a demultiplexer and not analysed. From phase 244, processing returns to phase 236, described above. If the active flag is "false", processing advances from phase 242 to phase 246, described below.

On the other hand, if the T_delay has not been exceeded, processing advances from phase 240 to phase 246, where the inference flag is read. If it is true, then the image frame is sent to the inference model for analysis in phase 248, and the inference result is provided to the demultiplexer in phase 250, from which processing returns to phase 236. On the other hand, if in phase 246 it is determined that the inference flag is "false", then the frame is provided to the demultiplexer, phase 244, from which again processing returns to phase 236.

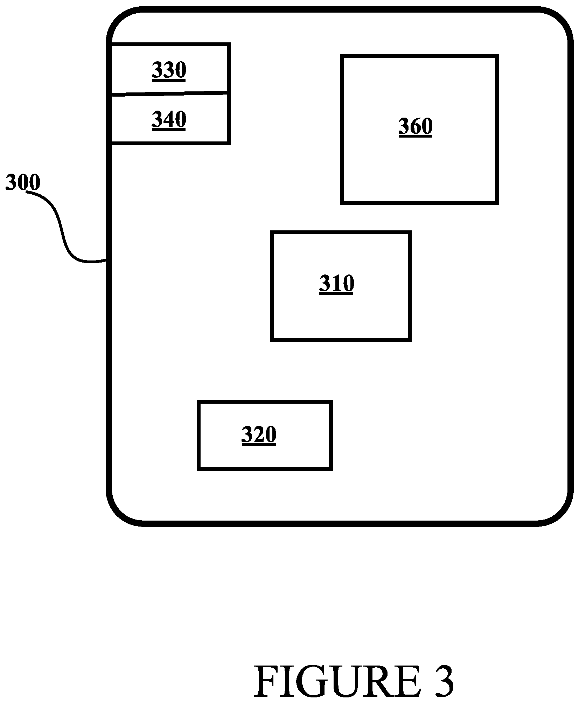

FIGURE 3 illustrates an example apparatus capable of supporting at least some embodiments of the present invention. Illustrated is device 300, which may comprise, for example, a computing substrate configured to run control service 106 or processing service 104 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Intel Xeon and/or AMD Opteron processor. Processor 310 may comprise at least one application-specific integrated circuit, ASIC. Processor 310 may comprise at least one field-programmable gate array, FPGA. Processor 310 may be means for performing method steps in device 300, such as obtaining, assigning, selecting, receiving and/or performing. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information, such as sensor data or instructions, in accordance with at least one standard. Transmitter 330 may comprise more than one transmitter. Receiver 340 may comprise more than one receiver. Transmitter 330 and/or receiver 340 may be configured to operate in accordance with, WLAN, Ethernet and/or worldwide interoperability for microwave access, WiMAX, standards, for example.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure sensor network parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3. In some embodiments, device 300 lacks at least one device described above.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

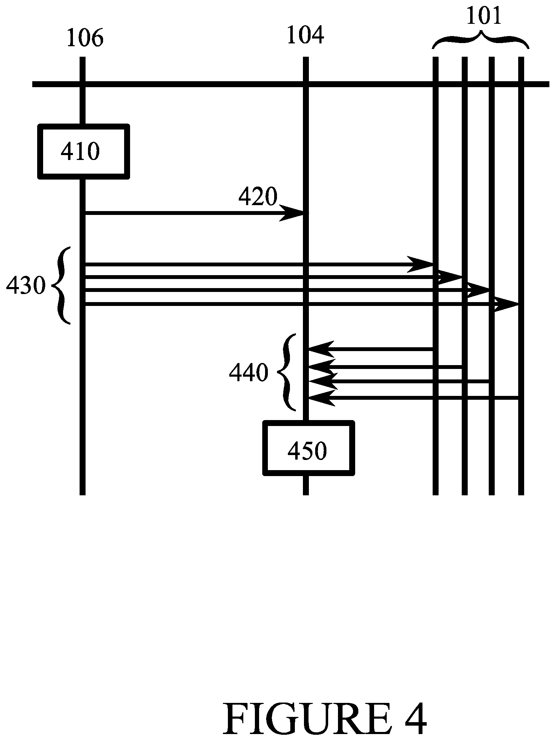

FIGURE 4 illustrates signalling in accordance with at least some embodiments of the present invention. On the vertical axes are disposed, on the left, control service 106 of FIGURE 1, in the centre, processing service 104 of FIGURE 1 and on the left, video cameras 101 of FIGURE 1. Time advances from the top toward the bottom.

Initially, in phase 410, control service 106 determines which cameras are active and which ones are inactive, and further the control service determines, in this phase and based on data from plural video cameras, which rate the inactive video cameras are to use in generating their sensor data items, such as video frames. As described above, this may be based on longer-term and shorter-term system-wide statistics of the sensor network. This may be based, at least partly, on information received in control service 106 from processing service 104.

In phase 420, control service 106 instructs processing service 104 concerning inference rates of the various video cameras, and in phase 430 the cameras are instructed concerning their state (active or inactive) and the sensor data item generation rate for inactive state video cameras. Phases 420 and 430 may take place in either order, or phase 420 may take place during phase 430.

In phase 440 the video cameras provide their sensor data items, in accordance with the instructions provided in phase 430, to processing service 104. Finally, in phase 450 processing service 104 analyses the sensor data items received in phase 440.

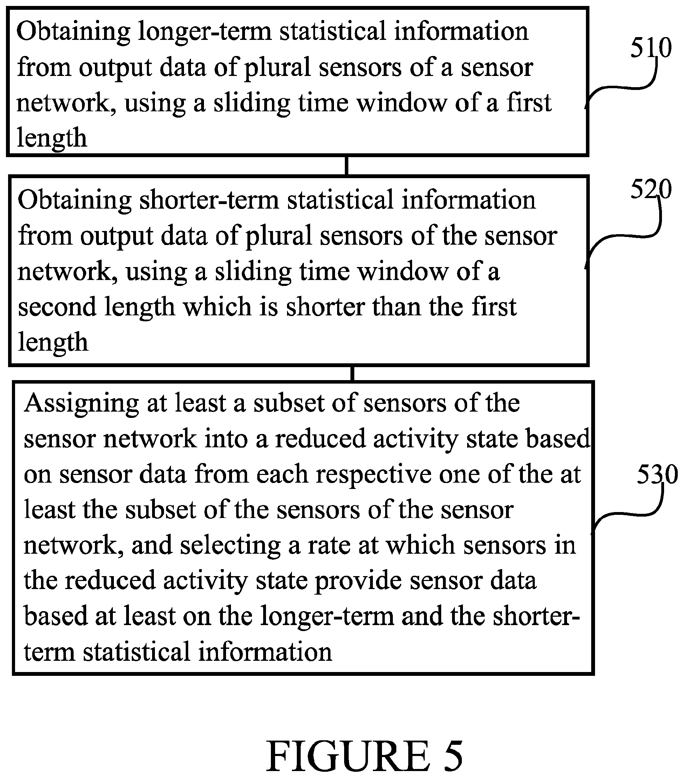

FIGURE 5 is a flow graph of a method in accordance with at least some embodiments of the present invention. The phases of the illustrated method may be performed in control service 106, for example, or in a control device configured to control the functioning thereof, when installed therein.

Phase 510 comprises obtaining longer-term statistical information from output data of plural sensors of a sensor network, using a sliding time window of a first length. Phase 520 comprises obtaining shorter-term statistical information from output data of the plural sensors of the sensor network, using a sliding time window of a second length which is shorter than the first length. The longer-term and shorter-term statistical information may be at least partly based on conclusions drawn from the output data of the plural sensors by the processing service. Finally, phase 530 comprises assigning at least a subset of sensors of the sensor network into a reduced activity state based on sensor data from each respective one of the at least the subset of the sensors of the sensor network, wherein the method comprises selecting a rate at which sensors in the reduced activity state provide sensor data based at least on the longer-term statistical information and the shorter-term statistical information.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in managing sensor networks.

### REFERENCE SIGNS LIST

| | |
|---|---|
| 101a, 101b, 101c, 101d | Video cameras |
| 102 | Communication network |
| 104 | Processing service |
| 106 | Control service |
| 201 - 216 | Phases of the process of FIGURE 2A |
| 218 - 234 | Phases of the process of FIGURE 2B |
| 236 - 250 | Phases of the process of FIGURE 2C |
| 300 - 360 | Structure of the device of FIGURE 3 |
| 410 - 450 | Stages of signalling in FIGURE 4 |
| 510 - 530 | Phases of the method of FIGURE 5 |

## Claims

1. An apparatus (300) comprising at least one processing core (310) and at least one memory (320) storing instructions that, when executed by the at least one processing core (310), cause the apparatus (300) at least to:
- obtain (510) longer-term statistical information from output data of plural sensors (101a, 101b, 101c, 101d) of a sensor network, using a sliding time window of a first length;
- obtain (520) shorter-term statistical information from output data of the plural sensors (101a, 101b, 101c, 101d) of the sensor network, using a sliding time window of a second length which is shorter than the first length, and
- assign (530) at least a subset of sensors (101a, 101b, 101c, 101d) of the sensor network into a reduced activity state based on sensor data from each respective one of the at least the subset of the sensors (101a, 101b, 101c, 101d) of the sensor network, wherein the apparatus is configured to select a rate at which sensors (101a, 101b, 101c, 101d) in the reduced activity state provide (440) sensor data based at least on the longer-term statistical information and the shorter-term statistical information and command (430) the at least the subset of sensors (101a, 101b, 101c, 101d) to use the selected rate in the reduced activity state.

2. The apparatus (300) according to claim 1, wherein the apparatus (300) is further caused to select a first rate at which the sensors (101a, 101b, 101c, 101d) in the reduced activity state provide (440) sensor data as a response to the longer-term statistical information and the shorter-term statistical information indicating a same state of the sensor network.

3. The apparatus (300) according to claim 2, wherein the apparatus (300) is further caused to select a second rate, faster than the first rate, at which the sensors (101a, 101b, 101c, 101d) in the reduced activity state provide (440) sensor data as a response to the longer-term statistical information and the shorter-term statistical information indicating different states of the sensor network.

4. The apparatus (300) according to any of claims 1 - 3, wherein the apparatus (300) is further caused to assign sensors (101a, 101b, 101c, 101d) of the sensor network which are not assigned into the reduced activity state into an activity state in which these sensors (101a, 101b, 101c, 101d) provide (440) the sensor data at a rate which is faster than the rate in the reduced activity state.

5. The apparatus (300) according to any of claims 1 - 4, wherein the apparatus (300) is further caused to provide to a sensor data processing service of the sensor network an instruction to skip processing of a part of sensor data from a first sensor of the sensor network in at least one processing function of the sensor data processing service.

6. The apparatus (300) according to any of claims 1 - 5, wherein the (300) apparatus is further caused to perform the obtaining of the longer-term statistical information and the shorter-term statistical information by deriving them from at least one of the following: an aggregate number of targets detected by the plural sensors (101a, 101b, 101c, 101d) taken together, a general average activity level in sensor data of the plural sensors, a speed at which targets move in sensor data of the plural sensors (101a, 101b, 101c, 101d) wherein the sensor data is video data, and a system-wide maximum level of activity in a single sensor, wherein the sensor data is video data.

7. A computer-implemented method comprising:
- obtaining (510) longer-term statistical information from output data of plural sensors (101a, 101b, 101c, 101d) of a sensor network, using a sliding time window of a first length;
- obtaining (520) shorter-term statistical information from output data of the plural sensors (101a, 101b, 101c, 101d) of the sensor network, using a sliding time window of a second length which is shorter than the first length, and
- assigning (530) at least a subset of sensors of the sensor network into a reduced activity state based on sensor data from each respective one of the at least the subset of the sensors (101a, 101b, 101c, 101d) of the sensor network, wherein the method comprises selecting a rate at which sensors (101a, 101b, 101c, 101d) in the reduced activity state provide (440) sensor data based at least on the longer-term statistical information and the shorter-term statistical information, and commanding (430) the at least the subset of sensors (101a, 101b, 101c, 101d) to use the selected rate in the reduced activity state.

8. The method according to claim 7, further comprising selecting a first rate at which the sensors (101a, 101b, 101c, 101d) in the reduced activity state provide (440) sensor data as a response to the longer-term statistical information and the shorter-term statistical information indicating a same state of the sensor network.

9. The method according to claim 8, further comprising selecting a second rate, faster than the first rate, at which the sensors (101a, 101b, 101c, 101d) in the reduced activity state provide (440) sensor data as a response to the longer-term statistical information and the shorter-term statistical information indicating different states of the sensor network

10. The method according to any of claim 7 - 9, further comprising assigning sensors (101a, 101b, 101c, 101d) of the sensor network which are not assigned into the reduced activity state into an activity state in which these sensors (101a, 101b, 101c, 101d) provide (440) the sensor data at a rate which is faster than the rate in the reduced activity state.

11. The method according to any of claims 7 - 10, further comprising providing to a sensor data processing service of the sensor network an instruction to skip processing of a part of sensor data from a first sensor of the sensor network in at least one processing function of the sensor data processing service.

12. The method according to any of claims 7 - 11, further comprising performing the obtaining of the longer-term statistical information and the shorter-term statistical information by deriving them from at least one of the following: an aggregate number of targets detected by the plural sensors taken together, a general average activity level in sensor data of the plural sensors, a speed at which targets move in sensor data of the plural sensors wherein the sensor data is video data, and a system-wide maximum level of activity in a single sensor, wherein the sensor data is video data.

13. A non-transitory computer readable medium having stored thereon a set of computer readable instructions that, when executed by at least one processor (310), cause an apparatus (300) to at least:
- obtain (510) longer-term statistical information from output data of plural sensors (101a, 101b, 101c, 101d) of a sensor network, using a sliding time window of a first length;
- obtain (520) shorter-term statistical information from output data of the plural sensors (101a, 101b, 101c, 101d) of the sensor network, using a sliding time window of a second length which is shorter than the first length, and
- assign (530) at least a subset of sensors (101a, 101b, 101c, 101d) of the sensor network into a reduced activity state based on sensor data from each respective one of the at least the subset of the sensors (101a, 101b, 101c, 101d) of the sensor network, wherein the apparatus is caused to select a rate at which sensors (101a, 101b, 101c, 101d) in the reduced activity state provide (440) sensor data based at least on the longer-term statistical information and the shorter-term statistical information and to command (430) the at least the subset of sensors (101a, 101b, 101c, 101d) to use the selected rate in the reduced activity state.

14. The non-transitory computer readable medium according to claim 13, having stored thereon the set of computer readable instructions that, when executed by the at least one processor, further cause the apparatus to select a first rate at which the sensors (101a, 101b, 101c, 101d) in the reduced activity state provide (440) sensor data as a response to the longer-term statistical information and the shorter-term statistical information indicating a same state of the sensor network.

15. The non-transitory computer readable medium according to claim 14, having stored thereon the set of computer readable instructions that, when executed by the at least one processor, further cause the apparatus to select a second rate, faster than the first rate, at which the sensors (101a, 101b, 101c, 101d) in the reduced activity state provide (440) sensor data as a response to the longer-term statistical information and the shorter-term statistical information indicating different states of the sensor network.

## Patentansprüche

1. Vorrichtung (300), umfassend mindestens einen Verarbeitungskern (310) und mindestens einen Speicher (320), der Anweisungen speichert, die, wenn sie durch den mindestens einen Verarbeitungskern (310) ausgeführt werden, die Vorrichtung (300) veranlassen, mindestens:
- längerfristige statistische Informationen aus Ausgabedaten von mehreren Sensoren (101a, 101b, 101c, 101d) eines Sensornetzwerks unter Verwendung eines gleitenden Zeitfensters einer ersten Länge zu erhalten (510);
- kürzerfristige statistische Informationen aus Ausgabedaten der mehreren Sensoren (101a, 101b, 101c, 101d) des Sensornetzwerks unter Verwendung eines gleitenden Zeitfensters einer zweiten Länge, die kürzer als die erste Länge ist, zu erhalten (520); und
- mindestens eine Teilmenge von Sensoren (101a, 101b, 101c, 101d) des Sensornetzwerks in einen Zustand verringerter Aktivität auf der Grundlage von Sensordaten von jedem jeweiligen der mindestens die Teilmenge der Sensoren (101a, 101b, 101c, 101d) des Sensornetzwerks zuzuweisen (530), wobei die Vorrichtung konfiguriert ist, eine Rate auszuwählen, mit der Sensoren (101a, 101b, 101c, 101d) im Zustand verringerter Aktivität Sensordaten bereitstellen (440), basierend mindestens auf den längerfristigen statistischen Informationen und den kürzerfristigen statistischen Informationen, und die mindestens die Teilmenge von Sensoren (101a, 101b, 101c, 101d) anzuweisen (430), die ausgewählte Rate im Zustand verringerter Aktivität zu verwenden.

2. Vorrichtung (300) nach Anspruch 1, wobei die Vorrichtung (300) ferner veranlasst wird, eine erste Rate auszuwählen, mit der die Sensoren (101a, 101b, 101c, 101d) im Zustand verringerter Aktivität Sensordaten bereitstellen (440), als Reaktion darauf, dass die längerfristigen statistischen Informationen und die kürzerfristigen statistischen Informationen einen gleichen Zustand des Sensornetzwerks anzeigen.

3. Vorrichtung (300) nach Anspruch 2, wobei die Vorrichtung (300) ferner veranlasst wird, eine zweite Rate, schneller als die erste Rate, auszuwählen, mit der die Sensoren (101a, 101b, 101c, 101d) im Zustand verringerter Aktivität Sensordaten bereitstellen (440), als Reaktion darauf, dass die längerfristigen statistischen Informationen und die kürzerfristigen statistischen Informationen verschiedene Zustände des Sensornetzwerks anzeigen.

4. Vorrichtung (300) nach einem der Ansprüche 1 bis 3, wobei die Vorrichtung (300) ferner veranlasst wird, Sensoren (101a, 101b, 101c, 101d) des Sensornetzwerks, die nicht in den Zustand verringerter Aktivität zugewiesen sind, in einen Aktivitätszustand zuzuweisen, in dem diese Sensoren (101a, 101b, 101c, 101d) die Sensordaten mit einer Rate bereitstellen (440), die schneller als die Rate im Zustand verringerter Aktivität ist.

5. Vorrichtung (300) nach einem der Ansprüche 1 bis 4, wobei die Vorrichtung (300) ferner veranlasst wird, einem Sensordatenverarbeitungsdienst des Sensornetzwerks eine Anweisung bereitzustellen, die Verarbeitung eines Teils von Sensordaten von einem ersten Sensor des Sensornetzwerks in mindestens einer Verarbeitungsfunktion des Sensordatenverarbeitungsdienstes zu überspringen.

6. Vorrichtung (300) nach einem der Ansprüche 1 bis 5, wobei die Vorrichtung (300) ferner veranlasst wird, das Erhalten der längerfristigen statistischen Informationen und der kürzerfristigen statistischen Informationen durchzuführen, indem sie diese aus mindestens einem der Folgenden ableitet: einer aggregierten Anzahl von Zielen, die durch die mehreren Sensoren (101a, 101b, 101c, 101d) zusammengenommen detektiert wurden, einem allgemeinen durchschnittlichen Aktivitätsniveau in Sensordaten der mehreren Sensoren, einer Geschwindigkeit, mit der sich Ziele in Sensordaten der mehreren Sensoren (101a, 101b, 101c, 101d) bewegen, wobei die Sensordaten Videodaten sind, und einem systemweiten maximalen Aktivitätsniveau in einem einzelnen Sensor, wobei die Sensordaten Videodaten sind.

7. Computerimplementiertes Verfahren, umfassend:
- Erhalten (510) von längerfristigen statistischen Informationen aus Ausgabedaten von mehreren Sensoren (101a, 101b, 101c, 101d) eines Sensornetzwerks, unter Verwendung eines gleitenden Zeitfensters einer ersten Länge;
- Erhalten (520) von kürzerfristigen statistischen Informationen aus Ausgabedaten der mehreren Sensoren (101a, 101b, 101c, 101d) des Sensornetzwerks, unter Verwendung eines gleitenden Zeitfensters einer zweiten Länge, die kürzer als die erste Länge ist; und
- Zuweisen (530) mindestens einer Teilmenge von Sensoren des Sensornetzwerks in einen Zustand verringerter Aktivität auf der Grundlage von Sensordaten von jedem jeweiligen der mindestens die Teilmenge der Sensoren (101a, 101b, 101c, 101d) des Sensornetzwerks, wobei das Verfahren das Auswählen einer Rate umfasst, mit der Sensoren (101a, 101b, 101c, 101d) im Zustand verringerter Aktivität Sensordaten bereitstellen (440), basierend mindestens auf den längerfristigen statistischen Informationen und den kürzerfristigen statistischen Informationen, und das Anweisen (430) der mindestens die Teilmenge von Sensoren (101a, 101b, 101c, 101d), die ausgewählte Rate im Zustand verringerter Aktivität zu verwenden.

8. Verfahren nach Anspruch 7, ferner umfassend das Auswählen einer ersten Rate, mit der die Sensoren (101a, 101b, 101c, 101d) im Zustand verringerter Aktivität Sensordaten bereitstellen (440), als Reaktion darauf, dass die längerfristigen statistischen Informationen und die kürzerfristigen statistischen Informationen einen gleichen Zustand des Sensornetzwerks anzeigen.

9. Verfahren nach Anspruch 8, ferner umfassend das Auswählen einer zweiten Rate, schneller als die erste Rate, mit der die Sensoren (101a, 101b, 101c, 101d) im Zustand verringerter Aktivität Sensordaten bereitstellen (440), als Reaktion darauf, dass die längerfristigen statistischen Informationen und die kürzerfristigen statistischen Informationen verschiedene Zustände des Sensornetzwerks anzeigen.

10. Verfahren nach einem der Ansprüche 7 bis 9, ferner umfassend das Zuweisen von Sensoren (101a, 101b, 101c, 101d) des Sensornetzwerks, die nicht in den Zustand verringerter Aktivität zugewiesen sind, in einen Aktivitätszustand, in dem diese Sensoren (101a, 101b, 101c, 101d) die Sensordaten mit einer Rate bereitstellen (440), die schneller als die Rate im Zustand verringerter Aktivität ist.

11. Verfahren nach einem der Ansprüche 7 bis 10, ferner umfassend das Bereitstellen einer Anweisung an einen Sensordatenverarbeitungsdienst des Sensornetzwerks, die Verarbeitung eines Teils von Sensordaten von einem ersten Sensor des Sensornetzwerks in mindestens einer Verarbeitungsfunktion des Sensordatenverarbeitungsdienstes zu überspringen.

12. Verfahren nach einem der Ansprüche 7 bis 11, ferner umfassend das Durchführen des Erhaltens der längerfristigen statistischen Informationen und der kürzerfristigen statistischen Informationen, indem sie aus mindestens einem der Folgenden abgeleitet werden: einer aggregierten Anzahl von Zielen, die durch die mehreren Sensoren zusammengenommen detektiert wurden, einem allgemeinen durchschnittlichen Aktivitätsniveau in Sensordaten der mehreren Sensoren, einer Geschwindigkeit, mit der sich Ziele in Sensordaten der mehreren Sensoren bewegen, wobei die Sensordaten Videodaten sind, und einem systemweiten maximalen Aktivitätsniveau in einem einzelnen Sensor, wobei die Sensordaten Videodaten sind.

13. Nichtflüchtiges computerlesbares Medium, auf dem ein Satz computerlesbarer Anweisungen gespeichert ist, die, wenn sie durch mindestens einen Prozessor (310) ausgeführt werden, eine Vorrichtung (300) veranlassen, mindestens:
- längerfristige statistische Informationen aus Ausgabedaten von mehreren Sensoren (101a, 101b, 101c, 101d) eines Sensornetzwerks unter Verwendung eines gleitenden Zeitfensters einer ersten Länge zu erhalten (510);
- kürzerfristige statistische Informationen aus Ausgabedaten der mehreren Sensoren (101a, 101b, 101c, 101d) des Sensornetzwerks unter Verwendung eines gleitenden Zeitfensters einer zweiten Länge, die kürzer als die erste Länge ist, zu erhalten (520); und
- mindestens eine Teilmenge von Sensoren (101a, 101b, 101c, 101d) des Sensornetzwerks in einen Zustand verringerter Aktivität auf der Grundlage von Sensordaten von jedem jeweiligen der mindestens die Teilmenge der Sensoren (101a, 101b, 101c, 101d) des Sensornetzwerks zuzuweisen (530), wobei die Vorrichtung veranlasst wird, eine Rate auszuwählen, mit der Sensoren (101a, 101b, 101c, 101d) im Zustand verringerter Aktivität Sensordaten bereitstellen (440), basierend mindestens auf den längerfristigen statistischen Informationen und den kürzerfristigen statistischen Informationen, und die mindestens die Teilmenge von Sensoren (101a, 101b, 101c, 101d) anzuweisen (430), die ausgewählte Rate im Zustand verringerter Aktivität zu verwenden.

14. Nichtflüchtiges computerlesbares Medium nach Anspruch 13, auf dem der Satz computerlesbarer Anweisungen gespeichert ist, die, wenn sie durch den mindestens einen Prozessor ausgeführt werden, die Vorrichtung ferner veranlassen, eine erste Rate auszuwählen, mit der die Sensoren (101a, 101b, 101c, 101d) im Zustand verringerter Aktivität Sensordaten bereitstellen (440), als Reaktion darauf, dass die längerfristigen statistischen Informationen und die kürzerfristigen statistischen Informationen einen gleichen Zustand des Sensornetzwerks anzeigen.

15. Nichtflüchtiges computerlesbares Medium nach Anspruch 14, auf dem der Satz computerlesbarer Anweisungen gespeichert ist, die, wenn sie durch den mindestens einen Prozessor ausgeführt werden, die Vorrichtung ferner veranlassen, eine zweite Rate, schneller als die erste Rate, auszuwählen, mit der die Sensoren (101a, 101b, 101c, 101d) im Zustand verringerter Aktivität Sensordaten bereitstellen (440), als Reaktion darauf, dass die längerfristigen statistischen Informationen und die kürzerfristigen statistischen Informationen verschiedene Zustände des Sensornetzwerks anzeigen.

## Revendications

1. Appareil (300) comprenant au moins un cœur de traitement (310) et au moins une mémoire (320) stockant des instructions qui, lorsqu'elles sont exécutées par le au moins un cœur de traitement (310), amènent l'appareil (300) à au moins :
- obtenir (510) des informations statistiques à plus long terme à partir de données de sortie de capteurs pluriels (101a, 101b, 101c, 101d) d'un réseau de capteurs, en utilisant une fenêtre temporelle glissante d'une première longueur ;
- obtenir (520) des informations statistiques à plus court terme à partir de données de sortie des capteurs pluriels (101a, 101b, 101c, 101d) du réseau de capteurs, en utilisant une fenêtre temporelle glissante d'une seconde longueur qui est plus courte que la première longueur ; et
- affecter (530) au moins un sous-ensemble de capteurs (101a, 101b, 101c, 101d) du réseau de capteurs dans un état d'activité réduite sur la base de données de capteur provenant de chacun respectif du au moins le sous-ensemble des capteurs (101a, 101b, 101c, 101d) du réseau de capteurs, dans lequel l'appareil est configuré pour sélectionner une cadence à laquelle des capteurs (101a, 101b, 101c, 101d) dans l'état d'activité réduite fournissent (440) des données de capteur sur la base au moins des informations statistiques à plus long terme et des informations statistiques à plus court terme et commander (430) le au moins le sous-ensemble de capteurs (101a, 101b, 101c, 101d) d'utiliser la cadence sélectionnée dans l'état d'activité réduite.

2. Appareil (300) selon la revendication 1, dans lequel l'appareil (300) est en outre amené à sélectionner une première cadence à laquelle les capteurs (101a, 101b, 101c, 101d) dans l'état d'activité réduite fournissent (440) des données de capteur en réponse aux informations statistiques à plus long terme et aux informations statistiques à plus court terme indiquant un même état du réseau de capteurs.

3. Appareil (300) selon la revendication 2, dans lequel l'appareil (300) est en outre amené à sélectionner une seconde cadence, plus rapide que la première cadence, à laquelle les capteurs (101a, 101b, 101c, 101d) dans l'état d'activité réduite fournissent (440) des données de capteur en réponse aux informations statistiques à plus long terme et aux informations statistiques à plus court terme indiquant des états différents du réseau de capteurs.

4. Appareil (300) selon l'une quelconque des revendications 1 à 3, dans lequel l'appareil (300) est en outre amené à affecter des capteurs (101a, 101b, 101c, 101d) du réseau de capteurs qui ne sont pas affectés dans l'état d'activité réduite dans un état d'activité dans lequel ces capteurs (101a, 101b, 101c, 101d) fournissent (440) les données de capteur à une cadence qui est plus rapide que la cadence dans l'état d'activité réduite.

5. Appareil (300) selon l'une quelconque des revendications 1 à 4, dans lequel l'appareil (300) est en outre amené à fournir à un service de traitement de données de capteur du réseau de capteurs une instruction de sauter le traitement d'une partie de données de capteur provenant d'un premier capteur du réseau de capteurs dans au moins une fonction de traitement du service de traitement de données de capteur.

6. Appareil (300) selon l'une quelconque des revendications 1 à 5, dans lequel l'appareil (300) est en outre amené à effectuer l'obtention des informations statistiques à plus long terme et des informations statistiques à plus court terme en les dérivant d'au moins l'un des éléments suivants : un nombre agrégé de cibles détectées par les capteurs pluriels (101a, 101b, 101c, 101d) pris ensemble, un niveau d'activité moyen général dans les données de capteur des capteurs pluriels, une vitesse à laquelle des cibles se déplacent dans les données de capteur des capteurs pluriels (101a, 101b, 101c, 101d) lorsque les données de capteur sont des données vidéo, et un niveau maximal d'activité à l'échelle du système dans un seul capteur, lorsque les données de capteur sont des données vidéo.

7. Procédé mis en œuvre par ordinateur comprenant :
- l'obtention (510) d'informations statistiques à plus long terme à partir de données de sortie de capteurs pluriels (101a, 101b, 101c, 101d) d'un réseau de capteurs, en utilisant une fenêtre temporelle glissante d'une première longueur ;
- l'obtention (520) d'informations statistiques à plus court terme à partir de données de sortie des capteurs pluriels (101a, 101b, 101c, 101d) du réseau de capteurs, en utilisant une fenêtre temporelle glissante d'une seconde longueur qui est plus courte que la première longueur ; et
- l'affectation (530) d'au moins un sous-ensemble de capteurs du réseau de capteurs dans un état d'activité réduite sur la base de données de capteur provenant de chacun respectif du au moins le sous-ensemble des capteurs (101a, 101b, 101c, 101d) du réseau de capteurs, dans lequel le procédé comprend la sélection d'une cadence à laquelle des capteurs (101a, 101b, 101c, 101d) dans l'état d'activité réduite fournissent (440) des données de capteur sur la base au moins des informations statistiques à plus long terme et des informations statistiques à plus court terme, et la commande (430) au moins le sous-ensemble de capteurs (101a, 101b, 101c, 101d) d'utiliser la cadence sélectionnée dans l'état d'activité réduite.

8. Procédé selon la revendication 7, comprenant en outre la sélection d'une première cadence à laquelle les capteurs (101a, 101b, 101c, 101d) dans l'état d'activité réduite fournissent (440) des données de capteur en réponse aux informations statistiques à plus long terme et aux informations statistiques à plus court terme indiquant un même état du réseau de capteurs.

9. Procédé selon la revendication 8, comprenant en outre la sélection d'une seconde cadence, plus rapide que la première cadence, à laquelle les capteurs (101a, 101b, 101c, 101d) dans l'état d'activité réduite fournissent (440) des données de capteur en réponse aux informations statistiques à plus long terme et aux informations statistiques à plus court terme indiquant des états différents du réseau de capteurs.

10. Procédé selon l'une quelconque des revendications 7 à 9, comprenant en outre l'affectation de capteurs (101a, 101b, 101c, 101d) du réseau de capteurs qui ne sont pas affectés dans l'état d'activité réduite dans un état d'activité dans lequel ces capteurs (101a, 101b, 101c, 101d) fournissent (440) les données de capteur à une cadence qui est plus rapide que la cadence dans l'état d'activité réduite.

11. Procédé selon l'une quelconque des revendications 7 à 10, comprenant en outre la fourniture à un service de traitement de données de capteur du réseau de capteurs d'une instruction de sauter le traitement d'une partie de données de capteur provenant d'un premier capteur du réseau de capteurs dans au moins une fonction de traitement du service de traitement de données de capteur.

12. Procédé selon l'une quelconque des revendications 7 à 11, comprenant en outre l'exécution de l'obtention des informations statistiques à plus long terme et des informations statistiques à plus court terme en les dérivant d'au moins l'un des éléments suivants : un nombre agrégé de cibles détectées par les capteurs pluriels pris ensemble, un niveau d'activité moyen général dans les données de capteur des capteurs pluriels, une vitesse à laquelle des cibles se déplacent dans les données de capteur des capteurs pluriels lorsque les données de capteur sont des données vidéo, et un niveau maximal d'activité à l'échelle du système dans un seul capteur, lorsque les données de capteur sont des données vidéo.

13. Support lisible par ordinateur non transitoire ayant stocké sur celui-ci un ensemble d'instructions lisibles par ordinateur qui, lorsqu'elles sont exécutées par au moins un processeur (310), amènent un appareil (300) à au moins :
- obtenir (510) des informations statistiques à plus long terme à partir de données de sortie de capteurs pluriels (101a, 101b, 101c, 101d) d'un réseau de capteurs, en utilisant une fenêtre temporelle glissante d'une première longueur ;
- obtenir (520) des informations statistiques à plus court terme à partir de données de sortie des capteurs pluriels (101a, 101b, 101c, 101d) du réseau de capteurs, en utilisant une fenêtre temporelle glissante d'une seconde longueur qui est plus courte que la première longueur ; et
- affecter (530) au moins un sous-ensemble de capteurs (101a, 101b, 101c, 101d) du réseau de capteurs dans un état d'activité réduite sur la base de données de capteur provenant de chacun respectif du au moins le sous-ensemble des capteurs (101a, 101b, 101c, 101d) du réseau de capteurs, dans lequel l'appareil est amené à sélectionner une cadence à laquelle des capteurs (101a, 101b, 101c, 101d) dans l'état d'activité réduite fournissent (440) des données de capteur sur la base au moins des informations statistiques à plus long terme et des informations statistiques à plus court terme et à commander (430) le au moins le sous-ensemble de capteurs (101a, 101b, 101c, 101d) d'utiliser la cadence sélectionnée dans l'état d'activité réduite.

14. Support lisible par ordinateur non transitoire selon la revendication 13, ayant stocké sur celui-ci l'ensemble d'instructions lisibles par ordinateur qui, lorsqu'elles sont exécutées par le au moins un processeur, amènent en outre l'appareil à sélectionner une première cadence à laquelle les capteurs (101a, 101b, 101c, 101d) dans l'état d'activité réduite fournissent (440) des données de capteur en réponse aux informations statistiques à plus long terme et aux informations statistiques à plus court terme indiquant un même état du réseau de capteurs.

15. Support lisible par ordinateur non transitoire selon la revendication 14, ayant stocké sur celui-ci l'ensemble d'instructions lisibles par ordinateur qui, lorsqu'elles sont exécutées par le au moins un processeur, amènent en outre l'appareil à sélectionner une seconde cadence, plus rapide que la première cadence, à laquelle les capteurs (101a, 101b, 101c, 101d) dans l'état d'activité réduite fournissent (440) des données de capteur en réponse aux informations statistiques à plus long terme et aux informations statistiques à plus court terme indiquant des états différents du réseau de capteurs.
